(19) Europäisches Patentamt / European Patent Office / Office européen des brevets

(11) **EP 4 378 965 A1**

(12) **EUROPEAN PATENT APPLICATION**
published in accordance with Art. 153(4) EPC

(43) Date of publication:
**05.06.2024 Bulletin 2024/23**

(21) Application number: **22849499.3**

(22) Date of filing: **26.07.2022**

(51) International Patent Classification (IPC):
**C08F 8/12** $^{(2006.01)}$          **C08F 2/20** $^{(2006.01)}$

(52) Cooperative Patent Classification (CPC):
**C08F 2/20; C08F 8/12**

(86) International application number:
**PCT/JP2022/028808**

(87) International publication number:
**WO 2023/008438 (02.02.2023 Gazette 2023/05)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.07.2021  JP 2021125968**

(71) Applicant: **Kuraray Co., Ltd.**
**Kurashiki-shi, Okayama 710-0801 (JP)**

(72) Inventor: **FUJITA, Kazuma**
**Tainai-shi, Niigata 959-2691 (JP)**

(74) Representative: **Müller-Boré & Partner**
**Patentanwälte PartG mbB**
**Friedenheimer Brücke 21**
**80639 München (DE)**

(54) **POLYVINYL ALCOHOL RESIN, DISPERSANT FOR SUSPENSION POLYMERIZATION,
METHOD FOR PRODUCING VINYL POLYMER PARTICLES, AND METHOD FOR PRODUCING
POLYVINYL ALCOHOL RESIN**

(57)    A polyvinyl alcohol resin containing a polyvinyl alcohol as a substantially sole polymer component, wherein the polyvinyl alcohol resin has: an absorbance $Abs_{320}$ at an optical path length of 10 mm and a wavelength of 320 nm being 0.09 or more, when prepared into a 0.1% by mass aqueous solution; a ratio ($Abs_{320}/Abs_{370}$) of the absorbance $Abs_{320}$ to an absorbance $Abs_{370}$ at an optical path length of 10 mm and a wavelength of 370 nm being 4.9 or less, when prepared into the 0.1% by mass aqueous solution; and a total content of divalent metal elements and trivalent metal elements being less than 30 μmol/g.

EP 4 378 965 A1

## Description

[TECHNICAL FIELD]

The present invention relates to a polyvinyl alcohol resin, a dispersant for suspension polymerization, a method for producing vinyl polymer particles, and a method for producing a polyvinyl alcohol resin.

[BACKGROUND ART]

In industrial production of a vinyl polymer such as polyvinyl chloride, suspension polymerization in which a vinyl compound such as vinyl chloride is dispersed in an aqueous medium in the presence of a dispersant (may be also referred to as "dispersion stabilizer") and polymerization is performed using an oil-soluble catalyst is widely carried out. Typical factors governing the quality of a vinyl polymer obtained by suspension polymerization of a vinyl compound include: a polymerization rate, a water-monomer ratio, a polymerization temperature, a type and amount of an oil-soluble catalyst, a type of a polymerization tank, a stirring speed of contents in the polymerization tank, a type of a dispersant, and the like; of these, the type of the dispersant has a great influence.

Types of performance required for a dispersant for suspension polymerization of a vinyl compound are exemplified by the stable attainment of vinyl polymer particles when a small amount of the dispersant is added, and the like. Conventionally, as a dispersant for suspension polymerization of a vinyl compound, cellulose derivatives such as methyl cellulose and carboxymethyl cellulose, as well as a partially saponified polyvinyl alcohol and the like have been used alone or in an appropriate combination.

As a polyvinyl alcohol (hereinafter, may be also referred to as "PVA") used as a dispersant for suspension polymerization, Patent Document 1 discloses "a polyvinyl alcohol-based resin, wherein when the polyvinyl alcohol-based resin is made into a 0.1 wt % aqueous solution, an absorbance (X) at a wavelength of 320 nm in an ultraviolet absorption spectrum thereof is 0.3 or more, and a ratio (Y/X) of an absorbance (Y) at a wavelength of 380 nm to the absorbance (X) at a wavelength of 320 nm is 0.09 or more".

[PRIOR ART DOCUMENTS]

[Patent Documents]

Patent Document 1: PCT International Publication No. 2020/184397

[SUMMARY OF THE INVENTION]

[Problems to Be Solved by the Invention]

Patent Document 1 discloses that due to a [-CO-(CH=CH)$_4$-] structure being sufficiently formed by way of a heat treatment, a PVA resin having a certain absorbance is obtained (paragraph [0011]), and that due to the PVA resin containing at least one of a salt and a hydroxide of a divalent or trivalent metal, the heat treatment can be performed efficiently (paragraph [0042], etc.). Therefore, in Patent Document 1, it is disclosed that the content of the salt and/or the hydroxide of the divalent or trivalent metal in the PVA resin is preferably 30 $\mu$mol/g or more (paragraph [0044]), and specifically, a PVA resin is produced having a content of magnesium acetate being 141 $\mu$mol/g (paragraph [0060]).

However, in a case in which a PVA resin having a high content of divalent metal elements and trivalent metal elements is used as a dispersant for suspension polymerization, insulation properties of a vinyl polymer to be obtained deteriorate, and there may be influences on properties of the vinyl polymer as, e.g., an electric wire coating material. Furthermore, in the case of the high content of divalent metal elements and trivalent metal elements, coloring and the like may occur in the PVA resin per se, as well as the vinyl polymer obtained when using the PVA resin as a dispersant for suspension polymerization. Moreover, in the case of the high content of divalent metal elements and trivalent metal elements, these act as catalysts, which may result in undesirable influences such as degradation on the PVA resin per se, as well as the vinyl polymer obtained when using the PVA resin as a dispersant for suspension polymerization. Therefore, it is desirable for the PVA resin used as a dispersant for suspension polymerization and/or the like to have low contents of these metal elements.

Furthermore, in a case of an especially small amount, it is difficult to use the conventional dispersant for suspension polymerization to stably conduct suspension polymerization, and there is a disadvantage in which particle diameters of vinyl polymer particles to be obtained become larger. In the Patent Document 1, specific properties, of the PVA resin actually obtained, as a dispersant for suspension polymerization were not evaluated whatsoever.

The present invention was made for solving the aforementioned problems, and an object of the invention is to provide: a polyvinyl alcohol resin which has a low content of divalent metal elements and trivalent metal elements and which, in the case of being used as a dispersant for suspension polymerization, enables producing vinyl polymer particles having small particle diameters even when a small amount of the polyvinyl alcohol resin is added; a dispersant for suspension polymerization in which such a polyvinyl alcohol resin is utilized; a method for producing vinyl polymer particles; and a method for producing such a polyvinyl alcohol resin.

[Means for Solving the Problems]

The object described above is accomplished by providing any one of the following:

(1) A polyvinyl alcohol resin containing a polyvinyl alcohol as a substantially sole polymer component, wherein the polyvinyl alcohol resin has: an absorbance $Abs_{320}$ at an optical path length of 10 mm and a wavelength of 320 nm being 0.09 or more, when prepared into a 0.1% by mass aqueous solution; a ratio ($Abs_{320}/Abs_{370}$) of the absorbance $Abs_{320}$ to an absorbance $Abs_{370}$ at an optical path length of 10 mm and a wavelength of 370 nm being 4.9 or less, when prepared into the 0.1% by mass aqueous solution; and a total content of divalent metal elements and trivalent metal elements being less than 30 µmol/g;
(2) The polyvinyl alcohol resin according to (1), wherein the ratio ($Abs_{320}/Abs_{370}$) is 2.0 or more;
(3) The polyvinyl alcohol resin according to (1) or (2), wherein the absorbance $Abs_{320}$ is less than 0.30;
(4) The polyvinyl alcohol resin according to any one of (1) to (3), wherein the polyvinyl alcohol resin has a viscosity at 20 °C being 4.5 mPa·s or more and 8.0 mPa s or less, when prepared into a 4% by mass aqueous solution;
(5) A dispersant for suspension polymerization, containing the polyvinyl alcohol resin according to any one of (1) to (4);
(6) A method for producing vinyl polymer particles, the method including a suspension polymerization process of a vinyl compound using the dispersant for suspension polymerization according to (5); and
(7) A method for producing a polyvinyl alcohol resin, the method including heating process of a saponified polyvinyl ester with stirring in a container, wherein the heating with stirring is performed at 90 °C or more and 180 °C or less for 350 min or more and 1,300 min or less, while circulating a gas in the container, and a circulation rate of the gas with respect to 100 parts by mass of the saponified polyvinyl ester is 2 parts by mass or more and 11 parts by mass or less per hour.

[EFFECTS OF THE INVENTION]

The present invention enables providing: a polyvinyl alcohol resin which has a low content of divalent metal elements and trivalent metal elements and which, in a case of being used as a dispersant for suspension polymerization, enables producing vinyl polymer particles having small particle diameters even when a small amount of the polyvinyl alcohol resin is added; a dispersant for suspension polymerization in which such a polyvinyl alcohol resin is utilized; and a method for producing such a polyvinyl alcohol resin.

[DESCRIPTION OF EMBODIMENTS]

Polyvinyl Alcohol Resin

The polyvinyl alcohol resin (PVA resin) of the present invention contains a PVA as a substantially sole polymer component, wherein the polyvinyl alcohol resin has: an absorbance $Abs_{320}$ at an optical path length of 10 mm and a wavelength of 320 nm being 0.09 or more, when prepared into a 0.1% by mass aqueous solution; a ratio ($Abs_{320}/Abs_{370}$) of the absorbance $Abs_{320}$ to an absorbance $Abs_{370}$ at an optical path length of 10 mm and a wavelength of 370 nm being 4.9 or less, when prepared into the 0.1% by mass aqueous solution; and a total content of divalent metal elements and trivalent metal elements being less than 30 µmol/g.
The PVA resin has such a low content of the divalent metal elements and the trivalent metal elements, and enables, in case of being used as a dispersant for suspension polymerization, producing vinyl polymer particles having small particle diameters even when a small amount of the PVA resin is added. While not clarified, the reason for enabling producing vinyl polymer particles having small particle diameters when adding only a small amount of the polyvinyl alcohol resin in the case in which the PVA resin is used as a dispersant for suspension polymerization is presumed to be as follows. In general, a PVA used as a dispersant for suspension polymerization has a terminal structure represented by R-CO-$(CH=CH)_n$- (where R represents an alkyl group; and n is a natural number). The polyene structure in the terminal structure is formed by a dehydration reaction occurring due to a heat treatment on the PVA. On the other hand, regarding an absorption spectrum of the PVA, it is considered that absorption at a wavelength of 320 nm is attributed to a -CO-$(CH=CH)_3$- structure, and absorption at a wavelength of 370 nm is attributed to a -CO-$(CH=CH)_4$- structure. Accordingly, in the PVA resin, the absorbance $Abs_{320}$ being 0.09 or more and the absorbance ratio ($Abs_{320}/Abs_{370}$)

being 4.9 or less means the PVA resin sufficiently has the -CO-(CH=CH)$_3$ structure, and furthermore, sufficiently has the -CO-(CH=CH)$_4$ structure. It is considered that due to the PVA resin thus having a large amount of relatively long polyene structures (n = 3, 4) and sufficient surfactant properties being consequently generated, in a case of using the PVA resin as a dispersant for suspension polymerization, polymerization stability increases, whereby the PVA resin enables producing vinyl polymer particles having small particle diameters even when a small amount of the PVA resin is added. Furthermore, the vinyl polymer particles obtained by using the PVA resin as a dispersant for suspension polymerization also have favorable plasticizer absorptivity.

Furthermore, as explained in detail later, the PVA resin having the above-described absorption spectrum is obtained by performing heating with stirring while circulating a gas under predetermined conditions. It is presumed that due to performing the heating with stirring while circulating the gas, the above-described dehydration reaction is facilitated, whereby the polyene structures to be formed become longer. Consequently, due to such a method being used, a favorable terminal structure can be introduced by using a heat treatment, even if a salt and a hydroxide of a divalent and/or a trivalent metal is not used. Due to this, in the case of using the PVA resin as a dispersant for suspension polymerization, vinyl polymer particles can be produced having small particle diameters even when a small amount of the polyvinyl alcohol resin is added and having favorable plasticizer absorptivity, despite the total content of the divalent metal elements and the trivalent metal elements being less than 30 μmol/g.

It is to be noted that "polyvinyl alcohol (PVA)" means a polymer having a vinyl alcohol unit (-CH$_2$CHOH-) as a structural unit. PVA typically further has a vinyl ester unit, and may further have other structural unit(s). Furthermore, "PVA resin" means a resin which contains PVA as a polymer component, and may contain other optional component(s).

The term "containing PVA as a substantially sole polymer component" means that within a range not influencing the effects of the present invention, other polymer components aside from the PVA may be contained. The "polymer component" means a compound resulting from polymerization of a monomer. The polymer component may be an organic substance having a molecular weight of 500 or more. The content of the PVA in the polymer component may be 95% by mass or more, or may be 99% by mass or more.

The term "divalent metal element" means a metal element which can be a divalent cation. The divalent metal element may be a metal element which can be an ion having a different valency, as long as the divalent metal element can be a divalent cation. Similarly, the term "trivalent metal element" means a metal element which can be a trivalent cation. The trivalent metal element may be a metal element which can be an ion having a different valency, as long as the trivalent metal element can be a trivalent cation. The divalent metal element and the trivalent metal element encompass elements being present in any of a compound, a single element, an ion, and the like. The divalent metal element and the trivalent metal element may form a polar group and a salt contained in the PVA.

Hereinafter, the PVA resin of the present invention is explained in detail.

The PVA contained in the PVA resin of the present invention is a polymer having a vinyl alcohol unit as a structural unit. The PVA is typically obtained by saponifying a polyvinyl ester.

The lower limit of a degree of saponification of the PVA is preferably 50 mol%, more preferably 55 mol%, still more preferably 60 mol%, yet more preferably 65 mol%, and particularly preferably 68 mol%. On the other hand, the upper limit of the degree of saponification may be 100 mol% or 99 mol%, and is preferably 98 mol%, more preferably 95 mol%, still more preferably 90 mol%, yet more preferably 85 mol%, and particularly preferably 80 mol%. When the degree of saponification of the PVA falls within the above range, due to, e.g., surface active performance being suitable, vinyl polymer particles having smaller particle diameters and more favorable plasticizer absorptivity can be produced when the PVA resin is used as a dispersant for suspension polymerization. The degree of saponification is a value measured according to a method described in JIS K6726: 1994.

The PVA may have other structural unit(s) aside from the vinyl alcohol unit and vinyl ester unit. Examples of a monomer that gives the other structural unit(s) include: α-olefins such as ethylene, propylene, 1-butene, isobutene, and 1-hexene; acrylic acid and methacrylic acid; acrylic acid esters such as methyl acrylate and ethyl acrylate; methacrylic acid esters such as methyl methacrylate and ethyl methacrylate; acrylamide derivatives such as N-methylacrylamide and N-ethylacrylamide; methacrylamide derivatives such as N-methylmethacrylamide and N-ethylmethacrylamide; vinyl ethers such as methyl vinyl ether, ethyl vinyl ether, n-propyl vinyl ether, isopropyl vinyl ether, and n-butyl vinyl ether; hydroxy group-containing vinyl ethers such as ethylene glycol vinyl ether, 1,3-propanediol vinyl ether, and 1,4-butanediol vinyl ether; allyl acetate; allyl ethers such as propyl allyl ether, butyl allyl ether, and hexyl allyl ether; monomers having an oxyalkylene group; isopropenyl acetate; hydroxy group-containing α-olefins such as 3-buten-1-ol, 4-penten-1-ol, 5-hexen-1-ol, 7-octen-1-ol, 9-decen-1-ol, and 3-methyl-3-buten-1-ol; monomers having a silyl group, such as vinyltrimethoxysilane, vinylmethyldimethoxysilane, vinyldimethylmethoxysilane, vinyltriethoxysilane, vinylmethyldiethoxysilane, vinyldimethylethoxysilane, 3-(meth)acrylamide propyltrimethoxysilane, and 3-(meth)acrylamide propyltriethoxysilane; and the like. Of these, the α-olefins, acrylic acid, methacrylic acid, the acrylic acid esters, and the methacrylic acid esters are preferred.

A proportion of the other structural unit(s) in total structural units in the PVA is preferably 20 mol% or less, and may be more preferably 10 mol% or less, 5 mol% or less, or 1 mol% or less. On the other hand, the proportion of the other structural unit(s) may be, for example, 0.1 mol% or more, or may be 1 mol% or more.

The lower limit of a viscosity-average degree of polymerization of the PVA is preferably 300, more preferably 500, and still more preferably 700. When the viscosity-average degree of polymerization is more than or equal to the lower limit, a protective colloid property may be increased, whereby when the PVA resin is used as a dispersant for suspension polymerization, vinyl polymer particles can be produced having smaller particle diameters, and the like. On the other hand, the upper limit of the viscosity-average degree of polymerization is preferably 3,000, more preferably 2,000, and still more preferably 1,500. When the viscosity-average degree of polymerization is less than or equal to the upper limit, the surface active performance may be improved, whereby when the PVA resin is used as a dispersant for suspension polymerization, the plasticizer absorptivity of the vinyl polymer particles to be obtained can increase, and furthermore, vinyl polymer particles can be produced having smaller particle diameters. The viscosity-average degree of polymerization is a value measured according to JIS K6726: 1994. More specifically, the average degree of polymerization can be determined by resaponifying the PVA to give the degree of saponification of 99.5 mol% or more, followed by purification, and measuring a limiting viscosity $[\eta]$ (unit: liter/g) in water at 30 °C and calculating therefrom by the following equation.

$$\text{Viscosity-average degree of polymerization} = ([\eta] \times 10^4 / 8.29)^{(1/0.62)}$$

The PVA typically has a terminal structure represented by $R\text{-}CO\text{-}(CH=CH)_n\text{-}$ (where R represents an alkyl group; and n is a natural number). R represents preferably an alkyl group having 1 to 4 carbon atoms, and more preferably a methyl group or an ethyl group. n may be, for example, an integer of 1 to 4. The PVA resin contains at least a PVA having a terminal structure represented by $R\text{-}CO\text{-}(CH=CH)_3\text{-}$, and a PVA having a terminal structure represented by $R\text{-}CO\text{-}(CH=CH)_4\text{-}$. As described later, at a time of polymerizing a polyvinyl ester, being a precursor, the terminal structure represented by $R\text{-}CO\text{-}(CH=CH)_n\text{-}$ can be effectively introduced into the polymer by using an aldehyde, a ketone, or the like as a chain transfer agent (modifying agent) and subjecting the polymer to a heat treatment.

The lower limit of a block character of residual vinyl ester units in the PVA may be preferably 0.40, and may be more preferably 0.42, 0.45, 0.50, or 0.54. On the other hand, the upper limit of this block character may be, for example, 1.

The block character described above is a numerical value representing distribution of residual esters (typically alkoxycarbonyl groups) and hydroxyl groups generated by saponification of esters, and can fall within a numerical range of 0 to 2. "0" indicates that residual esters or hydroxyl groups are distributed completely as blocks, and as the value increases, alternation increases: "1" indicates that residual esters and hydroxyl groups are present completely at random, and "2" indicates that residual esters and hydroxyl groups are present completely alternately. The "residual esters" as referred to herein mean esters ($-O\text{-}C(=O)\text{-}Q$ (where Q represents a hydrocarbon group other than $CH_2=CH\text{-}O\text{-}C(=O)$ moiety contained in the vinyl ester monomer)) contained in the vinyl ester units in the PVA to be obtained by saponification. In other words, the block character is a numerical value representing the distribution of the residual vinyl ester units and the vinyl alcohol units. It is to be noted that the block character can be determined by $^{13}C$-NMR spectroscopy. In a case in which the PVA has other repeating unit(s) aside from the vinyl ester unit and/or the vinyl alcohol unit, the block character is calculated for all the sequences of the vinyl ester units and/or the vinyl alcohol units in the PVA.

The block character can be adjusted according to a type of the vinyl ester monomer, saponification conditions such as a catalyst and/or a solvent, a heat treatment after the saponification, and the like. It is to be noted that when performing a heat treatment after the saponification, the block character tends to become 0.40 or more.

The lower limit of a content of the PVA in the polymer components in the PVA resin is preferably 99% by mass, and more preferably 99.9% by mass. The upper limit of the content of the PVA in the polymer components in the PVA resin may be 100% by mass, or may be 99.99% by mass. Examples of the polymer component(s) other than the PVA which may be contained in the PVA resin include a polyvinyl ester and the like.

The lower limit of a content of the PVA in nonvolatile components in the PVA resin is preferably 95% by mass and more preferably 98% by mass, and may be 99% by mass or 99.9% by mass. The upper limit of the content of the PVA in nonvolatile components in the PVA resin may be 100% by mass, or may be 99.99% by mass. Examples of nonvolatile components other than the PVA which may be contained in the PVA resin include a polymer other than the PVA, each compound used in production, other impurities, and the like. Typically, compounds containing the divalent metal elements and the trivalent metal elements, and the like are also nonvolatile components other than the PVA. Furthermore, the lower limit of a content of the PVA in the PVA resin is preferably 90% by mass and more preferably 95% by mass, and may be 98% by mass or 99% by mass. The lower limit of the content of the PVA in the PVA resin may be 100% by mass, or may be 99.99% by mass.

The PVA resin may contain volatile components. Since the PVA has hygroscopic properties and a solvent may remain in a case in which drying is insufficient, the PVA resin may contain volatile components at an arbitrary content. Examples of the volatile components include water, alcohols, and the like. The volatile components may be, for example, components having a normal boiling point of 250 °C or lower. The content of the volatile components in the PVA resin is typically 10% by mass or less, and preferably 1% by mass or less.

The lower limit of an absorbance $Abs_{320}$ of the PVA resin at an optical path length of 10 mm and a wavelength of 320 nm when the PVA resin is prepared into a 0.1% by mass aqueous solution is 0.09, and is preferably 0.15, more preferably 0.20, and still more preferably 0.25. The absorbance at the wavelength of 320 nm is attributed to a $-CO-(CH=CH)_3$ structure in the PVA. Due to the absorbance $Abs_{320}$ being more than or equal to the lower limit, sufficient surface active performance is generated, whereby in the case in which the PVA resin is used as a dispersant for suspension polymerization, vinyl polymer particles can be produced having small particle diameters and favorable plasticizer absorptivity. The absorbance $Abs_{320}$ is preferably 0.5 or less, more preferably 0.4 or less, still more preferably less than 0.40, yet more preferably 0.35 or less, and may be even more preferably 0.30 or less or less than 0.30. When the absorbance $Abs_{320}$ is more than or equal to the lower limit and less than or equal to or less than the upper limit, due to, e.g., the surface active performance being more suitable, vinyl polymer particles having still smaller particle diameters and more favorable plasticizer absorptivity can be produced when the PVA resin is used as a dispersant for suspension polymerization. The absorbance of the PVA resin at an optical path length of 10 mm when the PVA resin is prepared into a 0.1% by mass aqueous solution can be determined by a well-known procedure such as a procedure disclosed in

EXAMPLES.

The lower limit of an absorbance $Abs_{370}$ at an optical path length of 10 mm and a wavelength of 370 nm when the PVA resin is prepared into the 0.1% by mass aqueous solution is preferably 0.01, more preferably 0.03, still more preferably 0.05, and particularly preferably 0.06. The upper limit of the absorbance $Abs_{370}$ is preferably 0.3, more preferably 0.2, and still more preferably 0.1. The absorbance at the wavelength of 370 nm is attributed to a $-CO-(CH=CH)_4$ structure in the PVA. When the absorbance $Abs_{370}$ falls within the above range, the surface active performance can be made more favorable and the like, whereby when the PVA resin is used as a dispersant for suspension polymerization, vinyl polymer particles can be produced having still smaller particle diameters and more favorable plasticizer absorptivity.

The upper limit of a ratio ($Abs_{320}/Abs_{370}$) of the absorbance $Abs_{320}$ to the absorbance $Abs_{370}$ is 4.9, and is preferably 4.7, more preferably 4.5, still more preferably 4.3, yet more preferably 4.1, and may be even more preferably 3.8 or 3.5. Due to the absorbance ratio ($Abs_{320}/Abs_{370}$) being less than or equal to the upper limit, when the PVA resin is used as a dispersant for suspension polymerization, vinyl polymer particles can be produced having small particle diameters and favorable plasticizer absorptivity. In particular, in a case in which an absorbance $Abs_{280}$, described later, is relatively high (for example, 0.30 or more), due to the absorbance ratio ($Abs_{320}/Abs_{370}$) being 3.8 or less, or further, 3.5 or less, there is a tendency to enable producing vinyl polymer particles having still smaller particle diameters and more favorable plasticizer absorptivity when the PVA resin is used as a dispersant for suspension polymerization. The lower limit of the absorbance ratio ($Abs_{320}/Abs_{370}$) is preferably 2.0, more preferably 2.4, and still more preferably 2.8. In the case in which the absorbance ratio ($Abs_{320}/Abs_{370}$) is more than or equal to the lower limit, when the PVA resin is used as a dispersant for suspension polymerization, vinyl polymer particles can be produced having still smaller particle diameters and more favorable plasticizer absorptivity.

The lower limit of an absorbance $Abs_{280}$ at an optical path length of 10 mm and a wavelength of 280 nm when the PVA resin is prepared into the 0.1% by mass aqueous solution is preferably 0.1, more preferably 0.2, still more preferably 0.26, and particularly preferably 0.28, 0.30, or 0.32. The upper limit of the absorbance $Abs_{280}$ is preferably 0.5, and more preferably 0.4. The absorbance at the wavelength of 280 nm is attributed to a $-CO-(CH=CH)_2$ structure in the PVA. When the absorbance $Abs_{280}$ falls within the above range, due to, e.g., the surface active performance being more suitable, vinyl polymer particles can be produced having still smaller particle diameters when the PVA resin is used as a dispersant for suspension polymerization.

A total content of the divalent metal elements and the trivalent metal elements in the PVA resin is less than 30 $\mu$mol/g. The PVA resin may not contain either of the divalent metal elements and the trivalent metal elements. In the case in which the PVA resin contains the divalent metal elements and the trivalent metal elements, the total content of the divalent metal elements and the trivalent metal elements in the PVA resin is less than 30 $\mu$mol/g. Due to the total content of the divalent metal elements and the trivalent metal elements in the PVA resin being less than 30 $\mu$mol/g, when the PVA resin is used as a dispersant for suspension polymerization, a vinyl polymer being superior in insulation properties and the like and being accompanied by inhibited coloring and the like can be obtained. Furthermore, due to the total content of the divalent metal elements and the trivalent metal elements in the PVA resin being less than 30 $\mu$mol/g, coloring of the PVA resin per se is also inhibited. Moreover, due to the total content of the divalent metal elements and the trivalent metal elements in the PVA resin being less than 30 $\mu$mol/g, for example, a phenomenon in which these metal elements act as a catalyst, resulting in deterioration of the PVA resin, is inhibited. It is to be noted that in a case of monovalent metal elements such as a sodium element and/or the like, for example, even if the PVA resin contains the same in an amount of about 30 $\mu$mol/g, coloring, deterioration, and the like are unlikely to occur compared to the case in which the divalent metal elements and the trivalent metal elements are contained. The upper limit of the total content of the divalent metal elements and the trivalent metal elements is preferably 10 μmol/g, more preferably 1 μmol/g, still more preferably 0.1 μmol/g, and yet more preferably 0.05 μmol/g. The lower limit of the total content of the divalent metal elements and the trivalent metal elements may be 0 μmol/g, may be 0.0001 μmol/g, or may be 0.001 μmol/g. In the PVA resin, the divalent metal elements and the trivalent metal elements may be inevitably contained. The PVA resin may not contain either of the divalent metal elements and the trivalent metal elements. The total content of the divalent metal elements and the trivalent metal elements in the PVA resin can be determined by a well-known procedure such as an ICP emission analysis disclosed in EXAMPLES. It is to be noted that the total content of the divalent metal elements and the trivalent metal elements is a content based on the total PVA resin, including the volatile components which may be contained and the like.

The divalent metal elements and the trivalent metal elements may each be any metal element other than alkali metal elements. The divalent metal elements and the trivalent metal elements may be exemplified by Al, Ba, Ca, Cd, Co, Cr, Cu, Fe, Mg, Mn, Mo, Ni, Pb, Sb, Ti, V, and Zn.

The lower limit of a viscosity at 20 °C when the PVA resin is prepared into a 4% by mass aqueous solution is preferably 4.5 mPa·s, more preferably 5.0 mPa s, still more preferably 5.5 mPa s, and yet more preferably 6.0 mPa s. On the other hand, the upper limit of this viscosity is preferably 8.0 mPa·s, more preferably 7.5 mPa·s, and may be still more preferably 7.0 mPa·s. In the case in which the viscosity falls within the above range, when the PVA resin is used as a dispersant for suspension polymerization, vinyl polymer particles can be produced having still smaller particle diameters. The viscosity is a value measured according to a method described in JIS K6726: 1994.

The lower limit of a yellowness index (YI) when the PVA resin is prepared into a 1% by mass aqueous solution is preferably 10, more preferably 20, and still more preferably 30. On the other hand, the upper limit of the yellowness index (YI) is preferably 70, more preferably 60, and still more preferably 50. In the case in which the yellowness index (YI) falls within the above range, sufficient surface active performance can be expressed while inhibiting coloring, and when the PVA resin is used as a dispersant for suspension polymerization, vinyl polymer particles can be produced having still smaller particle diameters and more favorable plasticizer absorptivity. The yellowness index (YI) is a value measured according to a method described in ASTM E313-05.

A form of the PVA resin is not particularly limited, and typically, is preferably in a particle form (a powder form). An average particle diameter of the PVA resin in the case of being in the particle form is, for example, preferably 100 μm or more and 1,000 μm or less. The average particle diameter of the PVA resin is a value measured according to a method described in JIS K7369: 2009.

The PVA resin can be used in a wide variety of intended usages similar to those of conventionally well-known PVA resins, such as materials for films and fibers, additives for paper processing and fiber processing, adhesives, dispersants for emulsion polymerization and suspension polymerization, binders for inorganic substances, and the like. Of these, as described in detail later, the PVA resin can be particularly suitably used as a dispersant for suspension polymerization of a vinyl compound or the like.

Method for Producing PVA Resin

The method for producing a PVA resin of the present invention is not particularly limited, but the following method is preferred. Specifically, the method for producing a PVA resin of the present invention includes a step (step C) of subjecting a saponified polyvinyl ester (heat-untreated PVA) to heating with stirring in a container. The heating with stirring in step C is performed at 90 °C or more and 180 °C or less for 350 min or more and 1,300 min or less, while circulating a gas in the container. Furthermore, a circulation rate of the gas in step C with respect to 100 parts by mass of the saponified polyvinyl ester is 2 parts by mass or more and 11 parts by mass or less per hour. The production method enables obtaining a PVA resin which, in the case of use as a dispersant for suspension polymerization, enables vinyl polymer particles to be produced having small particle diameters even when a small amount of the PVA resin is added, with the content of the divalent metal elements and the trivalent metal elements being low.

The production method may further include, before step C:

a step (step A) of polymerizing a vinyl ester monomer to give a polyvinyl ester; and
a step (step B) of saponifying the polyvinyl ester.

The method for producing a PVA resin is explained in detail below, in the order of each step.

Step A

In step A, the vinyl ester monomer is polymerized to give a polyvinyl ester. The polyvinyl ester may be a homopolymer of a vinyl ester, or may be a copolymer of multiple types of vinyl esters or of a vinyl ester and another monomer. The procedure of polymerizing the vinyl ester monomer is exemplified by a well-known procedure such as a bulk polymerization procedure, a solution polymerization procedure, a suspension polymerization procedure, an emulsion polymerization procedure, and the like. Of these procedures, the bulk polymerization procedure performed without a solvent and the solution polymerization procedure performed with a solvent such as an alcohol or the like are preferred, and the solution polymerization procedure in which the polymerization is performed in the presence of a lower alcohol is more preferred. The lower alcohol is preferably an alcohol having 3 or fewer carbon atoms; more preferably methanol, ethanol, n-propanol, or isopropanol; and still more preferably methanol. In carrying out a polymerization reaction by the bulk polymerization procedure or the solution polymerization procedure, in terms of a reaction system, either of a batchwise system or a continuous system can be employed.

Examples of the vinyl ester monomer include vinyl formate, vinyl acetate, vinyl propionate, vinyl valerate, vinyl caprate, vinyl laurate, vinyl stearate, vinyl benzoate, vinyl pivalate, vinyl versatate, and the like. Of these, vinyl acetate is preferred.

A polymerization initiator to be used in the polymerization reaction is exemplified by well-known polymerization initiators, e.g., azo initiators such as 2,2'-azobisisobutyronitrile, 2,2'-azobis(2,4-dimethylvaleronitrile), and 2,2'-azobis(4-methoxy-2,4-dimethylvaleronitrile); organic peroxide initiators such as benzoyl peroxide, n-propyl peroxycarbonate, and diisopropyl peroxydicarbonate; and the like. A polymerization temperature at a time of carrying out the polymerization reaction is not particularly limited, and a range of 5 °C or higher and 200 °C or lower is appropriate.

In polymerizing the vinyl ester monomer, copolymerizable monomer(s) can be further copolymerized within a range not impairing the principles of the present invention. Examples of the copolymerizable monomer include the monomers described above as the monomer that gives the other structural unit(s) aside from the vinyl alcohol unit and the vinyl ester unit, which may be included in the PVA.

In light of efficiently obtaining the PVA having the above-described terminal structure, a certain chain transfer agent (modifier) is preferably also present in the polymerization of the vinyl ester monomer. Examples of the chain transfer agent include: aldehydes having an alkyl group, such as acetaldehyde, propionaldehyde, and butylaldehyde; ketones having an alkyl group, such as acetone and methyl ethyl ketone; and the like. These chain transfer agents may be used alone of one type, or in a combination of two or more types thereof. Furthermore, in the polymerization of the vinyl ester monomer, a chain transfer agent other than the above-mentioned aldehydes having an alkyl group and ketones having an alkyl group may further be also present for the purpose of adjusting the degree of polymerization of the PVA to be obtained. Examples of such a chain transfer agent include: aldehydes other than the above-mentioned aldehydes having an alkyl group; ketones other than the above-mentioned ketones having an alkyl group; mercaptans such as 2-hydroxyethanethiol; thiocarboxylic acids such as thioacetic acid; halogenated hydrocarbons such as trichloroethylene and perchloroethylene; and the like. An amount of the chain transfer agent to be added is determined according to the chain transfer constant of the chain transfer agent to be added, the target degree of polymerization of the PVA, and the like. Typically, the amount is preferably 0.1 to 10% by mass with respect to the vinyl ester to be used.

Step B

In step B, for example, the polyvinyl ester is saponified in an alcohol solution using an alkali catalyst or an acid catalyst. For the saponification reaction of the polyvinyl ester, an alcoholysis or hydrolysis reaction using a conventionally well-known basic catalyst such as sodium hydroxide, potassium hydroxide, or sodium methoxide, or an acid catalyst such as p-toluenesulfonic acid can be adopted. Examples of the solvent to be used in the saponification reaction include: alcohols such as methanol and ethanol; esters such as methyl acetate and ethyl acetate; ketones such as acetone and methyl ethyl ketone; aromatic hydrocarbons such as benzene and toluene; and the like. These can be used alone, or in a combination of two or more types thereof. Of these, due to convenience, it is preferable to use methanol or a mixed solution of methanol and methyl acetate as the solvent, and to carry out the saponification reaction in the presence of sodium hydroxide which serves as the basic catalyst.

The saponification can be conducted using a belt type reactor, a kneader type reactor, a tower type reactor, or the like. By going through step B, a solid of the saponified polyvinyl ester is obtained. This solid may be subjected to grinding or the like before being subjected to step C. In other words, the production method may include, between step B and step C, a step of grinding the solid of the saponified polyvinyl ester. Furthermore, the solid before the grinding or after the grinding may be subjected to a washing treatment and/or a drying treatment.

Step C

In step C, the saponified polyvinyl ester (heat-untreated PVA) is subjected to heating with stirring in a container. This container may be a heat treatment furnace. This container is an unsealed container having a structure which enables circulation of a gas.

A form of the saponified polyvinyl ester to be subjected to step C is not particularly limited, and a particle form is preferred, and a particle form in which an average particle diameter is 100 $\mu$m or more and 1,000 $\mu$m or less is further preferred. When the average particle diameter of the saponified polyvinyl ester particles is 100 $\mu$m or more, the saponified polyvinyl ester particles scattering as dust due to the circulating gas can be inhibited. On the other hand, when the average particle diameter of the saponified polyvinyl ester particles is 1,000 $\mu$m or less, a content of water and an organic solvent in the particles is likely to become lower, whereby a phenomenon in which the particles fuse can be inhibited. The average particle diameter of the saponified polyvinyl ester particles is a value measured according to a method described in JIS K7369: 2009.

Examples of an apparatus used in the heating with stirring of step C may include: a rotary kiln in which the container rotates; a planetary mixer having screw blades which rotate and revolve within the container; a mixer equipped with screw(s), baffle(s), etc., which rotate, in the container; and the like. In, e.g., the rotary kiln in which the container rotates, screw(s), baffle(s), etc. which rotate may be equipped in the container. Any of these apparatuses may be configured to enable circulating a gas within the container. A rotation speed of the container, the screw(s) equipped in the container, and/or the like in step C can be set to, for example, 1 rpm or more and 20 rpm or less.

The lower limit of a treatment temperature in step C is 90 °C, preferably 100 °C, more preferably 110 °C, still more preferably 120 °C, and yet more preferably 130 °C. When the treatment temperature is more than or equal to the lower limit, a sufficient heat treatment can be performed and the absorbance $Abs_{370}$ and the like may become sufficiently high. This results in enabling obtaining a PVA resin which, in the case of use as a dispersant for suspension polymerization, enables vinyl polymer particles to be produced having small particle diameters even when a small amount of the polyvinyl alcohol resin is added and having favorable plasticizer absorptivity. On the other hand, the upper limit of the treatment temperature is 180 °C, and is preferably 170 °C, more preferably 160 °C, and still more preferably 150 °C. Due to the treatment temperature being less than or equal to the upper limit, a crosslinking being generated in the PVA, and the like can be inhibited. It is to be noted that in the case in which the PVA resin in which the crosslinking has been generated is used as a dispersant for suspension polymerization, undissolved products and the like which may lead to fisheyes become more numerous in the vinyl polymer to be obtained.

The lower limit of a treatment time period in step C is 350 min, and is preferably 400 min, more preferably 500 min, and still more preferably 600 min. When the treatment time period is more than or equal to the lower limit, a sufficient heat treatment can be performed and the absorbance $Abs_{370}$ and the like may become sufficiently high. This results in enabling obtaining a PVA resin which, in the case of use as a dispersant for suspension polymerization, enables vinyl polymer particles to be produced having small particle diameters even when a small amount of the polyvinyl alcohol resin is added and having favorable plasticizer absorptivity. On the other hand, the upper limit of the treatment time period is 1,300 min, and is preferably 1,200 min, more preferably 1,100 min, and still more preferably 1,000 min. Due to the treatment time period being less than or equal to the upper limit, a crosslink being generated in the PVA and leading to insolubility, excessive coloring occurring, and the like tend to be inhibited.

The lower limit of a circulation rate of the gas into the container in step C per hour is, with respect to 100 parts by mass of the saponified polyvinyl ester, 2 parts by mass, and is preferably 2.5 parts by mass, and more preferably 3 parts by mass. Due to the circulation rate of the gas being more than or equal to the lower limit, a sufficient polyenization reaction may proceed, whereby the PVA resin can be obtained having the absorbance $Abs_{370}$ and the like being sufficiently high. As a result, in the case in which the PVA resin obtained is used as a dispersant for suspension polymerization, vinyl polymer particles can be produced having small particle diameters when a small amount of the polyvinyl alcohol resin is added and having favorable plasticizer absorptivity. On the other hand, the upper limit of the circulation rate of the gas is 11 parts by mass, and is preferably 10 parts by mass, and more preferably 9 parts by mass. Due to the circulation rate of the gas being less than or equal to the lower limit, coloring of the PVA resin to be obtained can be inhibited, and as a result, a hue of the vinyl polymer obtained when this PVA resin is used as a dispersant for suspension polymerization can be made favorable.

Examples of the gas to be circulated in step C include nitrogen, oxygen, mixed gases of these (air, etc.), and the like, and air can be suitably used.

Dispersant for Suspension Polymerization

The dispersant for suspension polymerization of the present invention contains the PVA resin of the present invention, described above. The dispersant for suspension polymerization is an additive used for, at the time of suspension polymerization, enhancing monomer dispersibility, polymerization stability, and the like, and for, e.g., controlling the particle diameters of polymer particles to be obtained. The lower limit of a content of the PVA resin of the present invention in the dispersant for suspension polymerization of the present invention is preferably 50% by mass, more preferably 70% by mass, and may be still more preferably 90% by mass or 99% by mass. The upper limit of the content of the PVA resin of the present invention in the dispersant for suspension polymerization of the present invention may be 100% by mass. The dispersant for suspension polymerization of the present invention may consist solely of the PVA resin of the present invention. Component(s) other than the PVA resin which may be contained in the dispersant for suspension polymerization of the present invention include additives such as other resins, surfactants, and plasticizers, various compounds used at the time of production, and the like. The dispersant for suspension polymerization of the present invention is not particularly limited in form, and is typically a powder.

The dispersant for suspension polymerization of the present invention is suitable as a dispersant for suspension polymerization of a vinyl compound. Due to using the dispersant for suspension polymerization of the present invention, polymerization stability is increased, whereby polymer particles can be efficiently obtained having small particle diameters. Furthermore, the polymer particles to be obtained by suspension polymerization using the dispersant for suspension polymerization of the present invention are also favorable in plasticizer absorptivity.

Method for Producing Vinyl Polymer Particles

A method for producing vinyl polymer particles of the present invention includes a step of subjecting a vinyl compound to suspension polymerization using the dispersant for suspension polymerization of the present invention. The production method is similar to well-known methods for producing vinyl polymer particles, except that the dispersant for suspension polymerization of the present invention is used as a dispersant.

In the method for producing vinyl polymer particles of the present invention, typically, a vinyl compound is subjected to suspension polymerization in an aqueous medium using the dispersant for suspension polymerization of the present invention. As the aqueous medium, not only pure water, but also an aqueous solution containing various types of additive components, or an aqueous medium containing another organic solvent may be used.

In carrying out the suspension polymerization of the vinyl compound, an amount of addition of the dispersant for suspension polymerization of the present invention is not particularly limited, and the lower limit thereof with respect to the vinyl compound on a mass basis is preferably 100 ppm, more preferably 300 ppm, and still more preferably 500 ppm. On the other hand, the upper limit thereof is preferably 50,000 ppm, more preferably 10,000 ppm, and may be still more preferably 5,000 ppm, 2,000 ppm, or 1,000 ppm. Due to using the dispersant for suspension polymerization of the present invention, vinyl polymer particles can be obtained having small particle diameters, even with such a small amount of addition.

The dispersant for suspension polymerization of the present invention may be used alone, or in combination with an other dispersant. The other dispersant is exemplified by: water-soluble cellulose ethers such as methyl cellulose, hydroxyethyl cellulose, hydroxypropyl cellulose, and hydroxypropyl methyl cellulose, as well as water-soluble polymers such as polyvinyl alcohol and gelatin; oil-soluble emulsifiers such as sorbitan monolaurate, sorbitan trioleate, glycerin tristearate, and ethylene oxide-propylene oxide block copolymer; water-soluble emulsifiers such as polyoxyethylene sorbitan monolaurate, polyoxyethylene glycerin oleate, and sodium laurate; and the like, which are typically used in suspension polymerization of a vinyl compound in an aqueous medium.

As a polymerization initiator to be used in the method for producing vinyl polymer particles of the present invention, a polymerization initiator which is conventionally used in polymerization of a vinyl compound may be used; specifically, a polymerization initiator similar to those exemplified in the description of the polymerization of the vinyl ester monomer may be used.

In the method for producing vinyl polymer particles of the present invention, various other types of additives may be added to a polymerization system as necessary. Examples of the additives include: polymerization modifiers such as aldehydes, halogenated hydrocarbons, and mercaptans; polymerization inhibitors such as a phenol compound, a sulfur compound, and an N-oxide compound; and the like. Furthermore, a pH adjuster, a scale inhibitor, a cross-linking agent, and/or the like may also be added. A plurality of the above-mentioned additives may be used in combination.

Examples of the vinyl compound which can be subjected to the suspension polymerization in the method for producing vinyl polymer particles of the present invention include: halogenated vinyls such as vinyl chloride; vinyl esters such as vinyl acetate and vinyl propionate; acrylic acid, methacrylic acid, and esters and salts thereof; maleic acid, fumaric acid, and esters and anhydrides thereof; styrene; acrylonitrile; vinylidene chloride; vinyl ether; and the like. Of these vinyl compounds, vinyl chloride is preferred. The method for producing vinyl polymer particles is particularly suitably used in suspension polymerization of vinyl chloride alone, or suspension polymerization of vinyl chloride and a monomer copolymerizable with the vinyl chloride. Examples of the monomer copolymerizable with the vinyl chloride include: vinyl esters such as vinyl acetate and vinyl propionate; (meth)acrylic acid esters such as methyl (meth)acrylate and ethyl (meth)acrylate; α-olefins such as ethylene and propylene; unsaturated dicarboxylic acids such as maleic anhydride and itaconic acid; acrylonitrile; styrene; vinylidene chloride; vinyl ether; and the like.

In carrying out the suspension polymerization of the vinyl compound in the method for producing vinyl polymer particles of the present invention, a charging proportion of each component, a polymerization temperature, a polymerization time period, and the like may be similar to conditions that have been conventionally adopted in suspension polymerization of a vinyl compound such as vinyl chloride. Furthermore, there is no limitation on a charging order and a ratio of the vinyl compound, the polymerization initiator, the dispersant, the aqueous medium, and other additives.

EXAMPLES

Hereinafter, the present invention is explained in detail by way of Examples, but the present invention is not in any way limited to these Examples. It is to be noted that each measurement method and each evaluation method adopted in the following Examples and Comparative Examples are indicated below.

Analysis of PVA Resin

In the following analyses, measurements were carried out using a powder sample reduced in accordance with a sample extraction procedure stipulated in JIS K6726: 1994.

(1) Degree of Saponification

Measured in accordance with JIS K6726: 1994.

(2) Viscosity of 4% Aqueous Solution

Measured in accordance with JIS K6726: 1994.

(3) Total Content of Divalent Metal Elements and Trivalent Metal Elements

Using "iCAP-6500 Duo", an ICP emission spectrometer manufactured by Thermo Fisher Scientific, a total content of divalent metal elements and trivalent metal elements was measured by ICP emission spectroscopy. Specifically, for Al, Ba, Ca, Cd, Co, Cr, Cu, Fe, Mg, Mn, Mo, Ni, Pb, Sb, Ti, V, and Zn, detected mass was converted to an amount of substance by atomic weight, and a total value thereof was considered to be the total content of divalent metal elements and trivalent metal elements. It is to be noted that divalent metal elements and trivalent metal elements other than Al, Ca, Cr, Cu, Fe, Mg, Mn, and Zn were not detected in any of the Examples or the Comparative Examples.

(4) Yellowness Index of Aqueous Solution

The PVA resin was measured out to be 1 g and dissolved in distilled water to produce a 1.0% by mass aqueous solution. A YI of the aqueous solution was measured in accordance with ASTM E313-05 using ZE6000, a colorimeter manufactured by Nippon Denshoku Industries Co., Ltd.

(5) Absorbance of Aqueous Solution

A previously weighed 0.1 g of the PVA resin was dissolved in distilled water to produce a 0.1% by mass aqueous solution. An ultraviolet absorption spectrum of the aqueous solution was measured by using UV-1800, an ultraviolet visible spectrophotometer manufactured by Shimadzu Corporation, using a quartz cell container with an optical path length of 10 mm.

Evaluations of Vinyl Chloride Polymer Particles

(1) Average Particle Diameter

A particle size distribution was measured by a dry sieve analysis using a wire mesh with a Tyler mesh standard, and an average particle diameter was determined.

(2) Plasticizer Absorptivity (CPA)

In accordance with a procedure disclosed in ASTM-D3367-75, an absorption amount of dioctyl phthalate at 23 °C was measured.

Example 1

(Production of PVA Resin)

As a material, 10 kg of a saponified polyvinyl ester (resin) in particle form having a degree of saponification of 72.4 mol%, a viscosity in a 4% aqueous solution of 6.2 mPa·s, a total content of divalent metal elements and trivalent metal elements of 0.009 $\mu$mol/g, and an average particle diameter of 570 $\mu$m was prepared. It is to be noted that this resin was a resin obtained by using sodium hydroxide as a catalyst to partially saponify a polyvinyl ester that was obtained by using acetaldehyde as a chain transfer agent. The material was charged into a heat treatment furnace (container) and subjected to a heat treatment involving: a rotation speed of the heat treatment furnace being 5 rpm; a treatment temperature of 135 °C; and a treatment time period of 1,200 min, while circulating air at a rate of 3.0 to 9.0 parts by mass/hr·100 parts by mass with respect to 100 parts by mass of the resin (material), whereby a PVA resin of Example 1 was obtained.

As the heat treatment furnace, a rotary kiln-type apparatus having a capacity of 50 L and being equipped with a jacket and a baffle, inside, for stirring resin was used. The heat treatment furnace was positioned such that the axis of rotation was in a horizontal direction. The apparatus was equipped with air circulation ports on both ends of the axis of rotation, and configured such that air circulated in the direction of the axis of rotation at a predetermined rate within the heat treatment furnace (container). Furthermore, steam was used as a heat source.

The PVA resin thus obtained was subjected to measurements of: the degree of saponification; the viscosity in a 4% aqueous solution; the total content of divalent metal elements and trivalent metal elements; the yellowness index of an aqueous solution thereof; and the absorbances of an aqueous solution thereof ($Abs_{280}$, $Abs_{320}$, and $Abs_{370}$). The results of these measurements and an absorbance ratio ($Abs_{320}/Abs_{370}$) are shown in Table 1.

(Production of Vinyl Polymer Particles)

Into an autoclave having a capacity of 5 L was charged 1,390 g of an aqueous solution in which 0.94 g (1,000 ppm with respect to the vinyl chloride monomer) of the PVA resin thus obtained was dissolved. Subsequently, 0.6 of cumyl peroxyneodecanoate (PERCUMYL ND-R, manufactured by NOF Corporation) and 0.9 g of t-butyl peroxyneodecanoate (PERBUTYL ND-R, manufactured by NOF Corporation) were charged into the autoclave. An operation of filling the autoclave with nitrogen gas until the pressure in the autoclave reached 0.3 Mpa and then degassing was performed six times, to remove oxygen. Thereafter, 940 g of vinyl chloride was charged, the temperature of the contents in the autoclave was elevated to 57 °C, and suspension polymerization was started under stirring. The pressure in the autoclave at the time of starting the polymerization was 0.83 MPa. When 4 hrs passed from the start of the suspension polymerization and the pressure in the autoclave reached 0.70 MPa, the polymerization was stopped, and unreacted vinyl chloride was removed. Thereafter, a polymerization slurry was taken out and dried at 65 °C overnight to give vinyl chloride polymer particles.

The vinyl chloride polymer (PVC) particles thus obtained were subjected to measurements of the average particle diameter and the plasticizer absorptivity. The results of these measurements are shown in Table 1.

Examples 2 to 5, Comparative Examples 1 to 2

PVA resins of each of Examples 2 to 5 and Comparative Examples 1 to 2 were obtained by a similar operation to that of Example 1, except that materials and heat treatment conditions were as described in Table 1. Each PVA resin thus obtained was subjected to measurements of: the degree of saponification; the viscosity in a 4% aqueous solution; the total content of divalent metal elements and trivalent metal elements; the yellowness index of an aqueous solution thereof; and the absorbances of an aqueous solution thereof ($Abs_{280}$, $Abs_{320}$, and $Abs_{370}$). The results of these measurements and an absorbance ratio ($Abs_{320}/Abs_{370}$) of each are shown in Table 1.

Using the obtained PVA resins of each of Examples 2 to 5 and Comparative Example 1, vinyl chloride polymer particles were obtained by a similar operation to that of Example 1. Furthermore, the PVA resin of Comparative Example 2 had poor polymerization stability; thus, vinyl chloride particles thereof were obtained by a similar operation to that of Example 1, except that 1,200 ppm of the PVA resin of Comparative Example 2 was used with respect to the vinyl chloride monomer. It is to be noted that in the case of using the PVA resin of Comparative Example 2 to produce the vinyl chloride polymer particles by the same conditions as those of the other Examples, etc., production of coarse particles of the vinyl chloride polymer, generation of scales, and the like occurred, leading to a result that was clearly unfavorable even compared to the result of Comparative Example 2 in Table 1. The vinyl chloride polymer (PVC) particles thus obtained were subjected to measurement of the average particle diameter and the plasticizer absorptivity. The results of these measurements are shown in Table 1.

Table 1

| | | | Example 1 | Example 2 | Example 3 | Example 4 | Example 5 | Comparative Example 1 | Comparative Example 2 |
|---|---|---|---|---|---|---|---|---|---|
| Material | degree of saponification | mol% | 72.4 | 71.9 | 72.0 | 71.8 | 72.1 | 71.8 | 72.4 |
| | viscosity of 4% aqueous solution | mPa·s | 6.2 | 6.6 | 6.6 | 6.6 | 6.6 | 6.6 | 5.5 |
| | total content of divalent metal elements and trivalent metal elements | μmol/g | 0.009 | 0.010 | 0.010 | 0.010 | 0.010 | 0.010 | 0.010 |
| Heat treatment conditions | treatment temperature | °C | 135 | 137 | 139 | 137 | 140 | 136 | 124 |
| | treatment time period | min | 1200 | 760 | 740 | 800 | 830 | 720 | 330 |
| | gas (air) circulation rate | parts by mass/hr 100 parts by mass | 3.0 -9.0 | 3.0 -9.0 | 3.0 -9.0 | 3.0 -9.0 | 3.0 -9.0 | <1.5 | 3.0 - 9.0 |
| PVA resin | degree of saponification | mol% | 72.4 | 71.9 | 72.0 | 71.8 | 72.1 | 72.1 | 72.4 |
| | viscosity of 4% aqueous solution | mPa·s | 7.1 | 6.3 | 6.3 | 6.3 | 6.8 | 6.3 | 5.5 |
| | total content of divalent metal elements and trivalent metal elements | μmol/g | 0.009 | 0.010 | 0.010 | 0.010 | 0.010 | 0.010 | 0.010 |
| | yellowness index of aqueous solution | - | 42.9 | 30.5 | 35.5 | 37.4 | 50.7 | 33.7 | 8.0 |
| | $Abs_{280}$ | - | 0.275 | 0.342 | 0.325 | 0.355 | 0.378 | 0.355 | 0.710 |
| | $Abs_{320}$ | - | 0.287 | 0.266 | 0.298 | 0.292 | 0.331 | 0.243 | 0.258 |
| | $Abs_{370}$ | - | 0.092 | 0.065 | 0.079 | 0.078 | 0.102 | 0.049 | 0.013 |
| | $Abs_{320}/Abs_{370}$ | - | 3.1 | 4.1 | 4.1 | 3.7 | 3.2 | 5.0 | 19.8 |
| Evaluation | average particle diameter of PVC | μm | 165 | 156 | 150 | 145 | 130 | 172 | 168* |
| | plasticizer absorptivity of PVC | % | 27.9 | 28.6 | 29.0 | 28.7 | 27.1 | 27.7 | 32.6* |
| Comparative Example 2 exhibited poor polymerization stability; thus, the evaluation was conducted with an amount of addition of 1,200 ppm (the other Examples and Comparative Example were evaluated using 1,000 ppm). | | | | | | | | | |

As shown in Table 1, the PVA resins of Examples 1 to 5 each had an absorbance $Abs_{320}$ of 0.09 or more and an absorbance ratio ($Abs_{320}/Abs_{370}$) of 4.9 or less, whereby in the case of usage as a dispersant for suspension polymerization, vinyl polymer particles were able to be produced having an average particle diameter of 165 $\mu$m or less, even when the amount of addition of the PVA resin was 1,000 ppm with respect to the vinyl chloride monomer. The vinyl polymer particles obtained by using the PVA resins of Examples 1 to 5 as a dispersant for suspension polymerization each also had a plasticizer absorptivity of 25% or more, being a favorable value. It is to be noted that based on, e.g., comparing Examples 1 to 5 with Comparative Examples 1 and 2, it is revealed that the effect due to the absorbance ratio ($Abs_{320}/Abs_{370}$) being 4.9 or less is that even among various types of performance required of a dispersant for suspension polymerization, the particle diameters of the vinyl polymer particles to be obtained can be reduced. Furthermore, the PVA resins of Examples 1 to 5 each had a total content of divalent metal elements and trivalent metal elements being less than 30 $\mu$mol/g, an extremely low content.

Furthermore it was able to be confirmed that due to, as in Examples 1 to 5, performing the heat treatment (heating with stirring) at 90 °C or more and 180 °C or less for 350 min or more and 1,300 min or less, while circulating a gas in the container at a predetermined rate, PVA resins were able to be obtained having an absorbance $Abs_{320}$ of 0.09 or more and an absorbance ratio ($Abs_{320}/Abs_{370}$) of 4.9 or less, even when the total content of the divalent metal elements and the trivalent metal elements was low. Owing to a low circulation rate of gas in Comparative Example 1 and a short treatment time period in Comparative Example 2, and the like, PVA resins were not able to be obtained having an absorbance $Abs_{320}$ of 0.09 or more and an absorbance ratio ($Abs_{320}/Abs_{370}$) of 4.9 or less.

[INDUSTRIAL APPLICABILITY]

The PVA resin of the present invention can be used as a dispersant at a time of subjecting a vinyl compound to suspension polymerization, and the like.

**Claims**

1. A polyvinyl alcohol resin comprising a polyvinyl alcohol as a substantially sole polymer component, wherein the polyvinyl alcohol resin has:

   an absorbance $Abs_{320}$ at an optical path length of 10 mm and a wavelength of 320 nm being 0.09 or more, when prepared into a 0.1% by mass aqueous solution;
   a ratio ($Abs_{320}/Abs_{370}$) of the absorbance $Abs_{320}$ to an absorbance $Abs_{370}$ at an optical path length of 10 mm and a wavelength of 370 nm being 4.9 or less, when prepared into the 0.1% by mass aqueous solution; and
   a total content of divalent metal elements and trivalent metal elements being less than 30 $\mu$mol/g.

2. The polyvinyl alcohol resin according to claim 1, wherein the ratio ($Abs_{320}/Abs_{370}$) is 2.0 or more.

3. The polyvinyl alcohol resin according to claim 1 or 2, wherein the absorbance $Abs_{320}$ is less than 0.30.

4. The polyvinyl alcohol resin according to any one of claims 1 to 3, wherein the polyvinyl alcohol resin has a viscosity at 20 °C being 4.5 mPa·s or more and 8.0 mPa·s or less, when prepared into a 4% by mass aqueous solution.

5. A dispersant for suspension polymerization, comprising the polyvinyl alcohol resin according to any one of claims 1 to 4.

6. A method for producing vinyl polymer particles, the method comprising a suspension polymerization process of a vinyl compound using the dispersant for suspension polymerization according to claim 5.

7. A method for producing a polyvinyl alcohol resin, the method comprising heating process of a saponified polyvinyl ester with stirring in a container, wherein

   the heating with stirring is performed at 90 °C or more and 180 °C or less for 350 min or more and 1,300 min or less, while circulating a gas in the container, and
   a circulation rate of the gas with respect to 100 parts by mass of the saponified polyvinyl ester is 2 parts by mass or more and 11 parts by mass or less per hour.

## INTERNATIONAL SEARCH REPORT

| | International application No. |
|---|---|
| | **PCT/JP2022/028808** |

### A. CLASSIFICATION OF SUBJECT MATTER

*C08F 8/12*(2006.01)i; *C08F 2/20*(2006.01)i
FI:  C08F8/12; C08F2/20

According to International Patent Classification (IPC) or to both national classification and IPC

### B. FIELDS SEARCHED

Minimum documentation searched (classification system followed by classification symbols)

C08F2,8,16,116,216

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | WO 2020/184397 A1 (MITSUBISHI CHEMICAL CORPORATION) 17 September 2020 (2020-09-17)<br>claims, paragraphs [0004], [0005], [0013], [0021], [0042], example 2 | 1-6 |
| Y | JP 2018-507311 A (SEKISUI SPECIALTY CHEMICALS AMERICA, LLC) 15 March 2018 (2018-03-15)<br>claims, paragraph [0023] | 1-6 |
| Y | JP 2004-250695 A (NIPPON SYNTHETIC CHEM IND CO LTD) 09 September 2004 (2004-09-09)<br>claims, paragraphs [0019], [0040]-[0042], examples 1-14 | 1-6 |
| Y | JP 2012-188489 A (DENKI KAGAKU KOGYO KK) 04 October 2012 (2012-10-04)<br>claims, paragraph [0043] | 1-6 |
| A | WO 2020/138341 A1 (SEKISUI CHEMICAL CO., LTD.) 02 July 2020 (2020-07-02)<br>entire text | 1-6 |
| A | WO 2016/076349 A1 (KURARAY CO., LTD.) 19 May 2016 (2016-05-19)<br>entire text | 1-6 |

☑ Further documents are listed in the continuation of Box C.     ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **30 September 2022** | **11 October 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**EP 4 378 965 A1**

**INTERNATIONAL SEARCH REPORT**

| | International application No. |
|---|---|
| | **PCT/JP2022/028808** |

### C.    DOCUMENTS CONSIDERED TO BE RELEVANT

| Category* | Citation of document, with indication, where appropriate, of the relevant passages | Relevant to claim No. |
|---|---|---|
| A | WO 2018/194122 A1 (KURARAY CO., LTD.) 25 October 2018 (2018-10-25)<br>      entire text | 1-6 |
| A | WO 2021/100638 A1 (KURARAY CO., LTD.) 27 May 2021 (2021-05-27)<br>      entire text | 1-6 |
| A | JP 5-105702 A (NIPPON SYNTHETIC CHEM IND CO LTD) 27 April 1993 (1993-04-27)<br>      entire text | 1-6 |
| A | WO 2018/117245 A1 (NIPPON SYNTHETIC CHEM IND CO LTD) 28 June 2018<br>(2018-06-28)<br>      entire text | 1-6 |
| P, A | WO 2021/200856 A1 (MITSUBISHI CHEMICAL CORPORATION) 07 October 2021<br>(2021-10-07)<br>      entire text | 1-6 |

Form PCT/ISA/210 (second sheet) (January 2015)

**16**

**INTERNATIONAL SEARCH REPORT**

International application No.

**PCT/JP2022/028808**

| **Box No. III** | **Observations where unity of invention is lacking (Continuation of item 3 of first sheet)** |
| --- | --- |

This International Searching Authority found multiple inventions in this international application, as follows:

- Invention 1: Invention in claims 1-6
- Invention 2: Invention in claim 7

The invention in claim 7 does not prescribe an intent which is a method for preparing a polyvinyl alcohol-based resin in claims 1-6, and also, even in consideration of the common technical knowledge, the invention in claim 7 is not considered to primarily mean a method for preparing a polyvinyl alcohol-based resin in claims 1-6.

In addition, the common feature of invention 1 and invention 2 is a "polyvinyl alcohol-based resin," but this feature lacks novelty without a need to cite documents.

Therefore, there are no other same or corresponding special technical features between invention 1 and invention 2.

As described above, inventions 1 and 2 do not satisfy unity of invention.

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☑ No required additional search fees were timely paid by the applicant. Consequently, this international search report is restricted to the invention first mentioned in the claims; it is covered by claims Nos.: **claims 1-6**

**Remark on Protest** ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (January 2015)

INTERNATIONAL SEARCH REPORT
Information on patent family members

International application No.

**PCT/JP2022/028808**

| Patent document cited in search report | | | Publication date (day/month/year) | Patent family member(s) | | | Publication date (day/month/year) |
|---|---|---|---|---|---|---|---|
| WO | 2020/184397 | A1 | 17 September 2020 | US 2021/0395409 A1 claims, paragraphs [0006]-[0008], [0014], [0031], [0059], example 2 | | | |
| | | | | EP | 3936532 | A1 | |
| | | | | CN | 113544163 | A | |
| JP | 2018-507311 | A | 15 March 2018 | US 2018/0044451 A1 claims, paragraph [0021] | | | |
| | | | | WO | 2016/141256 | A1 | |
| | | | | EP | 3265505 | A1 | |
| | | | | TW | 201700157 | A | |
| | | | | CN | 107548404 | A | |
| JP | 2004-250695 | A | 09 September 2004 | US 2004/0186232 A1 claims, paragraphs [0019], [0040]-[0042], examples 1-14 | | | |
| | | | | EP | 1443060 | A1 | |
| | | | | TW | 200427703 | A | |
| | | | | KR | 10-0808327 | B1 | |
| | | | | CN | 1519271 | A | |
| JP | 2012-188489 | A | 04 October 2012 | (Family: none) | | | |
| WO | 2020/138341 | A1 | 02 July 2020 | US 2022/0056169 A1 whole document | | | |
| | | | | EP | 3904397 | A1 | |
| | | | | CN | 113227161 | A | |
| | | | | TW | 202033569 | A | |
| WO | 2016/076349 | A1 | 19 May 2016 | US 2017/0335030 A1 whole document | | | |
| | | | | EP | 3219735 | A1 | |
| | | | | TW | 201623340 | A | |
| WO | 2018/194122 | A1 | 25 October 2018 | EP 3613778 A1 whole document | | | |
| | | | | CN | 110520450 | A | |
| | | | | TW | 201843191 | A | |
| WO | 2021/100638 | A1 | 27 May 2021 | TW | 202124457 | A | |
| JP | 5-105702 | A | 27 April 1993 | US 5780547 A whole document | | | |
| WO | 2018/117245 | A1 | 28 June 2018 | CN | 110099931 | A | |
| WO | 2021/200856 | A1 | 07 October 2021 | (Family: none) | | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020184397 A